# EUROPÄISCHE PATENTANMELDUNG

(11) **EP 1 496 284 A1**
(43) Veröffentlichungstag der Anmeldung: **12.01.2005**
(21) Anmeldenummer: 04010986.0
(22) Anmeldetag: 08.05.2004
(51) Int. Cl.: F16F 9/04

(54) **Passive Klemmung von Luftfederbälgen und Schläuchen**

(30) Priorität: 11.07.2003 DE 10331387
(71) Anmelder: Continental Aktiengesellschaft, 30165 Hannover (DE)
(72) Erfinder: Krauss, Hans-Peter, 30453 Hannover (DE)

(57) **Zusammenfassung**

**1**. **Passive Klemmung von Luftfederbälgen und Schläuchen.**
2.1 Eine Luftfeder (2) besteht im Wesentlichen aus zwei abstandsvariabel zueinander angeordneten Endgliedern (4, 6) - einem Luftfederdeckel (4) und einem Luftfederkolben (6) - und einem dazwischen angebrachten Luftfederbalg (8). Die Enden (8₁, 8₂) des Luftfederbalgs (8) sind zwischen dem Befestigungsbereich des jeweiligen Endgliedes (4, 6) und einem Klemmring (12) angeordnet.
2.2 Zur Erzielung einer prozesssicheren Klemmung des Luftfederbalgs (8), bei der die die Klemmung betreffenden Bauteile (4, 6) während des Klemmvorganges nicht höher belastet werden als im Betrieb, ist an der dem Klemmring (12) gegenüberliegenden Seite des Befestigungsbereichs von Deckel (4) und/oder Kolben (6) ein zusätzlicher Klemmring (14) angeordnet, der vorzugsweise durch axiales Aufschieben verspannt ist. Zumindest ein Teilbereich der zu dem Befestigungsbereich des Endgliedes (4 und/oder 6) gerichteten Berührungsfläche des zusätzlichen Klemmringes (14) kann angeschrägt sein.
2.3 Die erfindungsgemäße Klemmung ist nicht auf die Befestigung eines Luftfederbalges (8) an einem Luftfeder-Endglied (4, 6) beschränkt sondern ist in gleicher Weise auf die Befestigung eines Schlauches (8a) an einer Schlauchkupplungsarmatur oder an einem Rohrende (4 bzw. 6) anwendbar.

## Beschreibung

Die Erfindung betrifft eine Luftfeder im allgemeinen und insbesondere die Befestigung (Klemmung) eines Luftfederbalgs an einem Luftfeder-Endglied (Luftfederdeckel und/oder Luftfederkolben) - gemäß dem Oberbegriff des Anspruchs 1.

### Stand der Technik

Bisher wurde für eine derartige Befestigung eine sogenannte "aktive" Klemmung durchgeführt.

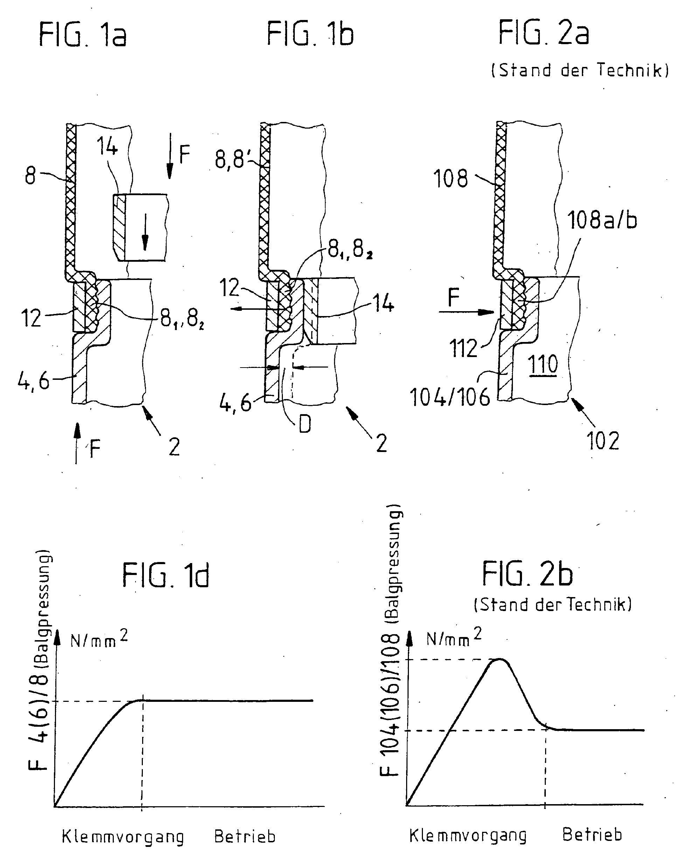

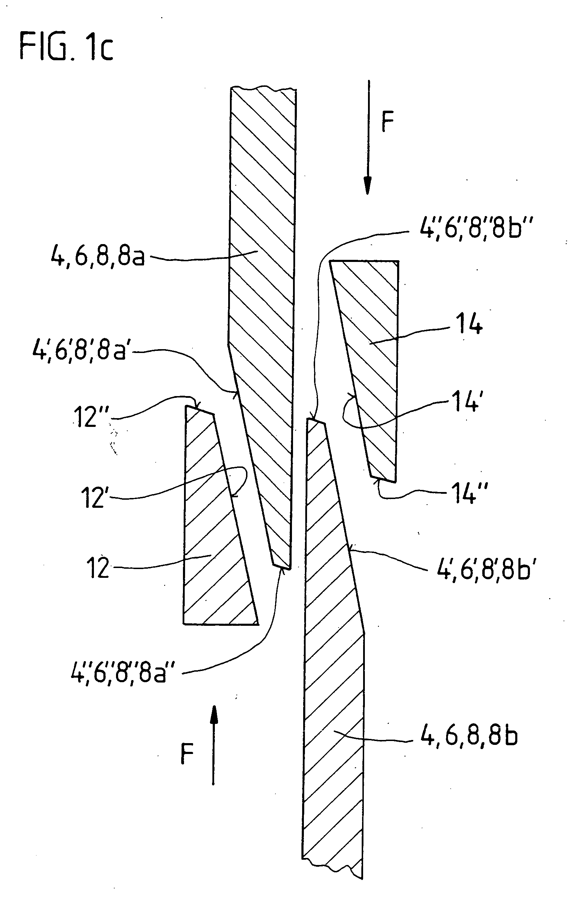

Die Fig. 2a zeigt den aus dem Stand der Technik bekannten Aufbau einer Verbindungsstelle Luftfederdeckel/Luftfederbalg bzw. Abrollkolben/Luftfederbalg einer herkömmlichen Luftfeder 102. Mit "104/106" ist der Befestigungsrand eines nur ausschnittsweise dargestellten Luftfeder-Endgliedes (Deckel 104 bzw. Abrollkolben 106) bezeichnet. "108a/b" stellt das Befestigungsende eines Luftfederbalges 108 dar. "112" symbolisiert einen Klemmring. Luftfederdeckel 104, Luftfederbalg 108 und Abrollkolben 106 umschließen gemeinsam ein Luftfedervolumen 110.
Die druckdichte Verbindung zwischen Luftfederdeckel 104 und -Balg 108, bzw. Abrollkolben 106 und -Balg 108, wird realisiert, indem das jeweilige, über den Rand des Deckels 104 bzw. des Kolbens 106 gestülpte Rollbalg-Ende 108a bzw. 108b mittels eines *radial* verpressbaren Klemmringes 112 zugfest eingespannt wird. Der eingetragene Pfeil F ↗ gibt die radiale Kraftrichtung (bzw. Bewegungsrichtung) des Klemmvorganges an. Das Diagramm (Fig. 2b) stellt die auf den Balg 108 und das darunter befindliche Endglied (Deckel 104 bzw. Abrollkolben 106) wirkende Flächenpressung dar.
Um eine hinreichende Klemmwirkung zu erzielen, ist es wegen der gewissen Elastizität der Materialien erforderlich, während des Klemmvorganges eine erhöhte Flächenpressung aufzuwenden. Dabei werden die Bauteile bei der Montage höher belastet als später im Betrieb. Aus diesem Grunde müssen Deckel 104 und/oder Kolben 106 wesentlich stärker dimensioniert sein als es der spätere Betrieb erfordert.

Die DE 101 05 769 A1 beschreibt die Befestigung eines Luftfederbalgs, der in einem ersten Befestigungsbereich an einem Luftfederdeckel und in einem zweiten Befestigungsbereich an einem Abrollkolben jeweils offenbar in herkömmlicher Weise mittels eines Klemmringes befestigt ist. Zusätzlich gibt es im Stirnbereich des Luftfederkolbens einen Klemmverschluss, der wenigstens aus einem äußeren Ringkörper und einem inneren Ringkörper besteht, die zusammensteckbar sind. Ob und - falls ja - wie dieser Klemmverschluss einen Beitrag zur Befestigung des Luftfederbalgs leistet und ob hierdurch eine Entlastung der herkömmlichen Klemmringbefestigung erfolgt, wird nicht näher erläutert.

Gemäß der in Fig. 5 der DE 199 07 656 A1 dargestellten Luftfeder weist die Befestigung des Rollbalgs am Abrollkolben außer einen herkömmlichen Klemmring eine Buchse auf, die sich in eine Innenöffnung einklipsen lässt.
Bei der in Fig. 4 der DE 199 07 656 A1 dargestellten Ausführungsvariante klemmt ein zweiter Klemmring einen zylindrischen Umfangsbereich des Rollbalgs radial zwischen sich und einem ersten Klemmring ein. Ob auf diese Weise ein besserer Halt gegen Ausreißkräfte gegeben ist und ob durch den zweiten Klemmring eine radiale Entlastung des Abrollkolbens erreicht wird, bleibt fraglich.

### Aufgabe der Erfindung

Die Aufgabe der Erfindung besteht darin, eine prozesssichere Klemmung von Luftfederbälgen zu beschreiben, wobei auch bei Verwendung eines weniger druckstabilen Luftfederdeckels bzw. Luftfederkolbens eine zuverlässig druckdichte und zugfeste Verbindung der zu verbindenden Teile erreicht werden kann.

### Lösung und Vorteile

Diese Aufgabe ist durch die im Patentanspruch 1 angegebenen Merkmale gelöst. Vorteilhafte Ausgestaltungen der Erfindung sind den Unteransprüchen entnehmbar.

Die radiale Flächenpressung, die zum Klemmen des Luftfederbalges auf dem Innenteil (Kolben oder Deckel) auf den Luftfederbalg aufgebracht und gehalten werden muss, wird nicht durch ein *radial* wirkendes Werkzeug (Klemmmaschine, Verrollvorrichtung o. ä.) erzeugt sondern durch *axiales* Einpressen eines Innen- oder Außenringes. Aus diesem Grunde kann bei Kolben und Deckel eine geringere Wandstärke gewählt werden. Die Verwendung von z. B. dünnwandigem Kunststoff, der keine Klemmkräfte aufzunehmen hat, ist möglich, was eine Kostenvergünstigung bedeutet.

Da der Innenring die Gegenhaltekraft für den Außenring aufnimmt, kann der Kolben und/oder der Deckel einfacher dimensioniert werden (dünneres Metallteil, andere Werkstoffe).

Auf diese Weise können für die Fertigung der Luftfederkolben auch andere Verfahren, die bei einer aktiven Klemmung (ohne Innenring) nicht möglich sind (z. B. Kolben als Blasformteil aus Kunststoff), in Betracht gezogen werden.
Darüber hinaus sind folgende Vorteile zu nennen:
- Funktionsverbesserung der Klemmung von Luftfederbälgen (Flächenpressung beim Betrieb ist gleichgroß, wie bei der Montage).
- Die Bauteile werden entsprechend der Belastungen im Betrieb dimensioniert und müssen nicht für die Montage überdimensioniert werden.
- Prozesssichere Klemmung, da eine größere, wirkende Flächenpressung im Betrieb möglich ist; dadurch werden größere Bauteiltoleranzen und ein einfacherer Prozess ermöglicht; [keine Klemmparametereinstellung/Überwachung erforderlich, da alle Funktionen von den Einzelteilabmessungen (Toleranzen) abhängen und nicht von Prozessparametern].
- Reduzierung von Montagezeiten, da die Komplettierung auf *einer* Montageeinrichtung erfolgen kann.
- Ermöglichung einfacherer Kolbenkonzepte, da der Kolben im Klemmbereich nicht mehr die hohen Anforderungen wie bei der aktiven Klemmung ertragen muss (dünnere Kolben, Ausführung in Aluminium, oder als Kunststoffbauteil z. B. als Blasformteil mit den Vorteilen: Gewichtsersparnis, kurze Werkzeugänderungszeiten; damit verbunden: einfachere, kostengünstigere Werkzeuge.
- Einfachere, kostengünstigere und flexiblere Montageeinrichtungen.
- Geringere Anforderungen an die Spannringe.
- Die erfindungsgemäße Klemmverbindung ist auch für Schlauchverbindungen verwendbar.

### Zeichnungen

Ein Ausführungsbeispiel der Erfindung wird anhand der Zeichnungen erläutert. Es zeigt:
Fig. 1 eine erfindungsgemäße Luftfeder, ausschnittsweise, im Längsschnitt, und zwar:
Fig. 1a vor der Montage eines zusätzlichen Klemmringes und
Fig. 1b im eingebauten Zustand des zusätzlichen Klemmringes.
Fig. 1c zeigt ausschnittsweise einen Längsschnitt der miteinander zu verbindenden Teile; und Fig. 1d zeigt ein Diagramm; "Flächenpressung auf Balg" während der Klemmung des zusätzlichen Klemmringes und während des Betriebs der Luftfeder.

### Beschreibung

Eine Luftfeder 2 besteht im Wesentlichen aus zwei abstandsvariabel zueinander angeordneten Endgliedern 4, 6 - einem Luftfederdeckel 4 und einem Luftfederkolben 6 - und einem dazwischen druckdicht angebrachten Luftfederbalg 8. Der Luftfederbalg 8 ist ein schlauchförmiges Gebilde, wobei eines 8₁ bzw. 8₂ seiner beiden Enden 8₁, 8₂ am Luftfederdeckel 4 und das andere Ende 8₂ bzw. 8₁ am Luftfederkolben (Abrollkolben) 6 befestigt ist. Luftfederdeckel 4, Luftfederbalg 8 und Abrollkolben 6 umschließen gemeinsam ein als Druckraum ausgebildetes Luftfedervolumen 10.

Anhand der Fig. 1a und 1b soll der Aufbau einer Luftfeder 2 mit erfindungsgemäßer Klemmung des Luftfederbalgs 8 verdeutlicht werden. Mit den Bezugszeichen "4, 6" ist der Befestigungsrand eines Luftfeder-Endgliedes (Deckels 4 bzw. Abrollkolbens 6) gekennzeichnet. "8₁, 8₂" symbolisiert die Enden des Rollbalgs 8. "12" ist das Bezugszeichen eines Klemmringes, der entweder lose auf das gemeinsame Ende 8₁ bzw. 8₂ von Balg 8 und Deckel 4 bzw. Abrollkolben 6 geschoben oder leicht in radialer Richtung vorgepresst sein kann. Eine Einspannung des jeweiligen Balg-Endes 8₁ bzw. 8₂ zwischen dem Rand des Deckels 4 bzw. Abrollkolbens 6 und dem Klemmring 12 erfolgt mittels eines zusätzlichen Klemmringes 14, der *axial* an der Innenseite des Deckels 4 bzw. Abrollkolbens 6 verspannt wird. Die Pfeile (F ↗) geben die Richtung der Kraft bzw. die Bewegungsrichtung bei der Montage des zusätzlichen Klemmringes 14 an. Zur besseren Einspannung ist zumindest ein Teilbereich der Berührungsfläche dieses zusätzlichen Klemmringes 14 angeschrägt (Schrägfläche 14', Fig. 1c). Dabei stellt der Neigungswinkel der Schrägung ein Maß für die Kraftübersetzung dar. An der vorderen Stirnfläche des Klemmringes 14 ist zwecks leichterer "Einfädelung" eine Fase 14" (Fig. 1c) vorgesehen. Die Fig. 1b stellt den Montage-Endzustand dar. Daraus ist ersichtlich, dass der Montagebereich des Luftfeder-Endgliedes (4 bzw. 6) durch die Klemmung um den Betrag D aufgedrückt worden ist.

Die erfindungsgemäße Klemmung ist nicht auf die axiale Verspannung des inneren Klemmringes 14 beschränkt. Die Klemmung kann gleichermaßen auch durch axiales Aufschieben des äußeren Klemmringes 12 erfolgen. Auch ist es denkbar, dass beide Klemmringe 12, 14 axial aufeinander zu bewegt werden, bis sie im Überlappungsbereich der zu verbindenden Teile 4 bzw. 6 und 8 eine feste Verklemmung ergeben.
Für den Fall, dass die Verklemmung durch axiales Aufschieben des äußeren Klemmringes 12 erfolgen soll, ist es sinnvoll, dass dieser äußere Klemmring 12 (ebenfalls) mit einer Anschrägung (Schrägfläche 12', Fig. 1c) versehen wird. Auch hier wird das "Einfädeln" des Klemmringes 12 durch eine an der "Vorderkante" dieses Klemmringes 12 angebrachte Fase 12" (Fig. 1c) erleichtert.
Zweifellos ist es ebenfalls denkbar, dass beide Klemmringe 12, 14 mit einer Schrägfläche 12', 14' und/oder mit einer vorderen Fase 12", 14" versehen sind.

Die erfindungsgemäße Klemmung ist nicht auf die Befestigung eines Luftfederbalges 8 an einem Luftfeder-Endglied 4 und/oder 6 beschränkt sondern ist in gleicher Weise auf die Befestigung des Endes 8₁ bzw. 8₂ eines Schlauches 8 an einer Kupplungsarmatur 4 bzw. 6 anwendbar.
D. h.: In den Figuren 1a und 1b kann das Bezugszeichen 8 auch ein Schlauch bedeuten und mit dem Bezugszeichen 4 bzw. 6 kann eine Schlauchkupplung oder ein Rohrende gemeint sein.
Auch ist es denkbar, dass sowohl 8 als auch 4 bzw. 6 jeweils ein schlauchförmiges Gebilde darstellt, die beide mit Hilfe von Klemmringen 12, 14 druckdicht und zugfest zu verbinden sind. Z. B. können auf diese Weise zwei Schlauchrollbälge 8a, 8b zu einem Doppelrollbalg einer Doppelrollbalg-Luftfeder verbunden werden.
Schließlich können mit Hilfe der erfindungsgemäß axial verspannbaren Klemmringe 12, 14 auch die Enden zweier Rohre 4, 6, z. B. Kunststoffrohre, druckdicht und zugfest miteinander verbunden werden, wobei die erfindungsgemäß miteinander verbundenen Rohre bzw. Schläuche einen gemeinsamen Druckraum umschließen.
Erfindungswesentlich ist in jedem Fall die axiale Verspannung mindestens einer der Klemmringe.

In Fig. 1c ist der wesentliche Kern der Erfindung noch einmal verdeutlicht. "4, 6, 8, 8a" und "4, 6, 8, 8b" stellen die möglichen Enden zweier druckdicht und zugfest miteinander zu verbindenden Teile kreisförmigen bis elliptischen Querschnitts dar. "12" stellt den Längsschnitt eines äußeren und "14" den Längsschnitt eines inneren Klemmringes dar. Die miteinander zu verbindenden Teile weisen einen Überlappungsbereich auf. Mindestens einer der Klemmringe 12 und/oder 14 ist zum Zwecke einer druckdichten Verbindung der sich überlappenden Enden in Pfeilrichtung axial verschieblich. Zur Erzeugung einer vorgegebenen Klemmwirkung weisen - im dargestellten Beispiel - sowohl die sich überlappenden Enden 4, 6, 8, 8a bzw. 4, 6, 8, 8b als auch äußerer 12 und innerer Klemmring 14 eine Schrägfläche 4', 6', 8', 8a', 8b', 12', 14' auf. Zum leichteren "Einfädeln" ist an der jeweiligen "Vorderkante" eine Fase 4", 6", 8", 8a", 8b"; 12", 14" vorgesehen.

Das in Fig. 1d dargestellte Diagramm stellt die auf den Balg 8 während des Klemmvorganges und während des Betriebes wirkende Flächenpressung dar. Daraus geht hervor, dass die Flächenpressung während der Montage nicht über die Flächenpressung während des Betriebs hinausgeht, so dass auf eine Überdimensionierung von Abrollkolben 6 und Deckel 4 verzichtet werden kann.

### Bezugszeichenliste

### a) Stand der Technik

- 102: Luftfeder
- 104, 106: Luftfeder-Endglied (Befestigungsrand),
- 104: Luftfederdeckel, Deckel
- 106: Luftfederkolben, Abrollkolben
- 108: Luftfederbalg, Balg
- 108a, 108b: Befestigungsenden des Luftfederbalgs
- 110: Luftfedervolumen, Druckraum
- 112: Klemmring
- F ↗: Kraftrichtung (Bewegungsrichtung) des Klemmvorganges

### b) Erfindung

- 2: Luftfeder
- 4, 6: Endglieder, Luftfeder-Endglieder (Befestigungsrand)
- 4: Luftfederdeckel, Deckel; Schlauchkupplung, Rohrende
- 6: Luftfederkolben, Abrollkolben; Schlauchkupplung, Rohrende
- 8, 8a, 8b: Luftfederbalg, Balg; Schlauch
- 4, 6, 8, 8a, 8b: miteinander zu verbindende Teile
- 8₁, 8₂: Befestigungsenden eines Luftfederbalgs
- 10: Luftfedervolumen, Druckraum
- 12: (äußerer) Klemmring
- 14: zusätzlicher (innerer) Klemmring
- F ↗: Kraftrichtung (Bewegungsrichtung) des Klemmvorganges
- 4', 6', 8', (a', 8b', 12', 14':: Schrägung an den miteinander zu verbindenden Teilen 4, 6, 8, 8a, 8b, 12, 14.
- 4", 6", 8", 8a", 8b", 12", 14":: Fase an den miteinander zu verbindenden Teilen 4, 6. 8. 8a. 8b, 12, 14.

## Patentansprüche

1. Luftfeder (2)
mit zwei abstandsvariabel zueinander angeordneten Endgliedern (4, 6) - einem Luftfederdeckel (4) und einem Luftfederkolben (6) - und einem dazwischen angebrachten Luftfederbalg (8),
wobei die Enden (8₁, 8₂) des Luftfederbalgs (8) zwischen dem Befestigungsbereich des jeweiligen Endgliedes (4, 6) und einem Klemmring (12) angeordnet sind,
**dadurch gekennzeichnet,**
**dass** an der dem Klemmring (12) gegenüberliegenden Seite des Befestigungsbereichs von Deckel (4) und/oder Kolben (6) ein zusätzlicher Klemmring (14) angeordnet ist.

2. Luftfeder nach Anspruch 1,
**dadurch gekennzeichnet,**
**dass** mindestens einer der beiden Klemmringe (12 und/oder 14) durch axiales Aufschieben verspannbar ist.

3. Luftfeder nach Anspruch 1 oder 2,
**dadurch gekennzeichnet,**
**dass** mindestens eine der zueinander gerichteten Berührungsflächen der Klemmringe (12, 14) und/oder mindestens eines der Befestigungsbereiche der miteinander zu verbindenden Teile (4 oder 6 und 8) keilförmig angeschrägt ist (Schrägflächen 12', 14'; 4', 6', 8').

4. Luftfeder nach einem der Ansprüche 1 bis 3,
**dadurch gekennzeichnet,**
**dass** zumindest ein jeweiliger Teilbereich mindestens eines der vor der Montage axial zueinander gerichteten Enden der Klemmringe (12, 14) und/oder mindestens eine der Stirnflächen der miteinander zu verbindenden Teile (4 oder 6 und 8) eine Fase (4" oder 6" und/oder 8"), d. h. eine Abschrägung der sonst rechtwinkligen Kante - zwecks leichteren Einfädelns bei der Montage - aufweist

5. Verwendung eines Klemmringes (12) und eines zusätzlichen Klemmringes (14) nach einem der Ansprüche 1 bis 4 zum zugfesten und druckdichten Verbinden zweier, sich koaxial überlappender Enden kreisförmigen bis elliptischen Querschnitts zweier, rohr- oder schlauchförmiger Teile, z. B. eines flexibel/elastischen (8) und eines starren Teils (4 bzw. 6), zweier flexibel/elastischer (8a und 8b) oder zweier starrer Teile (4 bzw. 6), miteinander, wobei das flexibel/elastische Teil (8a oder 8b) ein Schlauch und das starre Teil (4 bzw. 6) ein Rohr oder ein Schlauchflansch sein kann,
**dadurch gekennzeichnet,**
**dass** der Klemmring (12) und/oder der zusätzliche Klemmring (14) an sich gegenüberliegenden Seiten des Überlappungsbereichs axial gegeneinander verspannbar ist (sind).

6. Verfahren zum zugfesten und druckdichten Verbinden zweier, sich koaxial überlappender Enden kreisförmigen bis elliptischen Querschnitts zweier rohr- oder schlauchförmiger Teile,
z. B. eines flexibel/elastischen (8, 8a oder 8b) und eines starren Teiles (4 bzw. 6), aber auch zweier flexibel/elastischer (8a und 8b) oder zweier starrer Teile (4 bzw. 6), miteinander,
mittels jeweils eines im Überlappungsbereich der Teile (4, 6, 8a, 8b) innen und eines außen anzuordnenden Klemmringes (12, 14),
wobei insbesondere das flexibel/elastische Teil (8) der Balg, und
wobei das starre Teil (4 bzw. 6) der Deckel (4) oder der Abrollkolben (6) einer Luftfeder (2) sein kann,
**dadurch gekennzeichnet,**
**dass** der innere (12) und/oder der äußere Klemmring (14) axial gegeneinander verschoben werden, bis beide Klemmringe (12, 14) im Überlappungsbereich der Teile (4 bzw. 6 und 8) einander gegenüberliegend angeordnet sind.
